# EUROPÄISCHE PATENTSCHRIFT

(11) **EP 2 481 275 B1**
(45) Veröffentlichungstag und Bekanntmachung des Hinweises auf die Patenterteilung: **24.12.2014**
(21) Anmeldenummer: 11192078.1
(22) Anmeldetag: 06.12.2011
(51) Int. Cl.: A01D 41/12, B60R 3/02

(54) **Aufstiege für eine Arbeitsmaschine**
Ladder for a work machine
Montées pour une machine de travail

(30) Priorität: 31.01.2011 DE 102011003354
(43) Veröffentlichungstag der Anmeldung: 01.08.2012
(73) Patentinhaber: Deere & Company, Moline, IL 61265-8098 (US)
(72) Erfinder: Fuchs, Volker, 54439 Saarburg (DE)
(74) Vertreter: Holst, Sönke

(56) Entgegenhaltungen:
- DE-A1- 1 580 314
- DE-A1- 2 531 890
- FR-A5- 2 141 074
- US-A- 5 813 494
- US-A1- 2003 230 867
- US-A1- 2006 001 251

## Beschreibung

Die Erfindung betrifft eine Arbeitsmaschine mit einer in einer Vorwärtsrichtung bewegbaren tragenden Struktur, einer an der tragenden Struktur befestigten Kabine, die einen Bedienerarbeitsplatz und eine um eine zumindest etwa vertikale Türschwenkachse nach außen schwenkbare Tür umfasst, einer begehbaren, der Tür benachbarten, maschinenfesten Plattform, und einer gegenüber der maschinenfesten Plattform zwischen einer Betriebsposition und einer begehbaren Außerbetriebsposition bewegbaren Aufstiege mit übereinander angeordneten Trittstufen.

### Stand der Technik

Bei vielen Arten von Arbeitsmaschinen befindet sich der Bedienerarbeitsplatz in größerer Höhe über dem Erdboden, um den Bediener einen guten Überblick über die zu bearbeitende Fläche zu bieten. Der Bedienerarbeitsplatz wird üblicherweise über eine Aufstiege erreicht und verlassen, die mehrere übereinander angeordnete Trittstufen und in der Regel zusätzlich eine obere, begehbare Plattform umfasst, von der aus der Bedienerarbeitsplatz direkt oder über eine maschinenfeste Plattform erreichbar ist. Die Aufstiege ist in vielen Fällen zwischen einer Betriebsposition, in der sie beim Betrieb der Arbeitsmaschine nicht stört, und einer zum Auf- und Absteigen geeigneten Außerbetriebsposition beweglich.

Die DE 1 580 314 A1 beschreibt eine unterhalb eines Bedienerarbeitsplatzes in Form einer offenen Fahrerplattform befestigte Aufstiege in Form einer Stufenleiter. Die bezüglich der Vorwärtsrichtung in ihrer Mitte um die Hochachse schwenkbar an der Fahrerplattform gelagerte Aufstiege ist durch einen um eine horizontal und quer zur Vorwärtsrichtung verlaufende Achse schwenkbaren Handhebel um die Hochachse zwischen einer Betriebsposition, in der sie sich von der Fahrerplattform nach vorn erstreckt, und einer begehbaren Außerbetriebsposition verschwenkbar, in welcher sie sich quer zur Vorwärtsrichtung erstreckt. Die Aufstiege ist in beiden Positionen arretierbar. Der Handhebel umfasst einen unterhalb der Achse angeordneten Hebelarm, der bei einer Drehung des Arms um einen Winkel von etwa 45° über eine Stange und einen an der Aufstiege angelenkten, weiteren Arm die Drehung der Aufstiege zwischen der Betriebsposition und der Außerbetriebsposition um 90° bewerkstelligt. In der Betriebsposition bildet der Handhebel eine seitliche Begrenzung der Fahrerplattform.

Die Anordnung der Aufstiege der DE 1 580 314 A1 umfasst eine recht aufwändige Mechanik und erfordert aufgrund der recht großen Übersetzung der Bewegung des Handhebels einen relativ hohen Kraftaufwand. Da seitlich an der Fahrerplattform starr an ihr befestigte Geländerteile vor und hinter dem zum Auf- und Abstieg vorgesehenen, durch den Handhebel verschließbaren Bereich vorgesehen sind, eignet sich diese Aufstiege nicht für Kabinen, die derart breit sind, dass ihre Tür in geöffneter Stellung seitlich über die Fahrerplattform hinausragt, denn die Tür würde mit den Geländerteilen kollidieren.

Die US 5 813 494 offenbart eine gleichartig schwenkbare Aufstiege zu einer Fahrerplattform mit Kabine gemäß dem Oberbegriff des Anspruchs 1.

Die als gattungsbildend angesehene DE 196 20 072 A1 beschreibt eine Aufstiege, die sich aus Trittstufen und einer oberen Plattform zusammensetzt und quer zur Vorwärtsrichtung einer Erntemaschine verschiebbar am Rahmen der Erntemaschine befestigt ist. Die Aufstiegsrichtung erfolgt in Fahrtrichtung von vorn oder hinten. Ist die Aufstiege nach außen in die Außerbetriebsposition verschoben, kann der Bediener den in einer Kabine vorgesehenen Bedienerarbeitsplatz verlassen und über eine maschinenfeste Plattform auf die obere Plattform der Aufstiege gelangen und von dort über die Trittstufen nach unten gelangen bzw. in umgekehrter Richtung den Bedienerarbeitsplatz vom Erdboden aus erreichen. Für den Erntebetrieb oder die Fahrt auf einer Straße wird die Aufstiege in Richtung auf die Längsmittelachse der Erntemaschine zu in die Betriebsposition verschoben.

Durch die Verschiebung der Aufstiege der DE 196 20 072 A1 in Querrichtung erreicht man, dass in der Außerbetriebsposition der Aufstiege auch bei relativ breiten Kabinen ein Öffnen der Kabinentür möglich ist, in der Betriebsposition jedoch die zulässige Breite der Erntemaschine nicht überschritten wird. Allerdings erfordert die verschiebbare Anbringung der Aufstiege einen beträchtlichen Aufwand. Auch diese Anordnung eignet sich nicht für Kabinen, die derart breit sind, dass ihre Tür in geöffneter Stellung seitlich über die Fahrerplattform hinausragt, denn eine derartige Tür würde mit seitlichen Geländern der Aufstiege kollidieren.

### Aufgabe der Erfindung

Die der Erfindung zu Grunde liegende Aufgabe wird darin gesehen, eine Arbeitsmaschine mit einer zwischen einer Betriebsposition und einer Außerbetriebsposition um die Hochachse verschwenkbaren Aufstiege und einer Kabine bereitzustellen, deren Tür in geöffneter Stellung seitlich über die maschinenfeste Plattform hinausragen kann, wobei aber in der Betriebsposition eine zulässige Breite nicht überschritten wird.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Arbeitsmaschine umfasst eine tragende Struktur, in der Regel einen Rahmen, die durch in Eingriff mit dem Erdboden befindliche Mittel (Räder und/oder Gurtbandlaufwerke) darauf abgestützt wird und in einer Vorwärtsrichtung bewegt werden kann. An der tragenden Struktur ist in einer hinreichenden Höhe über dem Erdboden eine Kabine befestigt, die einen Bedienerarbeitsplatz und eine um eine zumindest etwa vertikale Türschwenkachse schwenkbare Tür umfasst. An der tragenden Struktur ist weiterhin eine begehbare, maschinenfeste Plattform befestigt, die sich seitlich neben der geschlossenen Tür befindet. Eine Aufstiege mit übereinander angeordneten Trittstufen ist um eine zumindest näherungsweise vertikal verlaufende Drehachse drehbar an der tragenden Struktur abgestützt. Die Aufstiege ist um ihre Drehachse gegenüber der maschinenfesten Plattform zwischen einer Betriebsposition, in der sie sich in der Regel innerhalb einer für eine Straßenfahrt zulässigen Breite der Arbeitsmaschine befindet, und einer Außerbetriebsposition verschwenkbar, in welcher der Bediener über die Trittstufen der Aufstiege auf die maschinenfeste Plattform gelangen und von dort bei geöffneter Tür die Kabine betreten kann. Die Türschwenkachse und die Drehachse der Aufstiege sind an oder in der Nachbarschaft von diagonal gegenüberliegenden Ecken der maschinenfesten Plattform angeordnet.

Auf diese Weise erreicht man, dass die Tür geöffnet werden kann, ohne die Drehachse der Aufstiege zu überstreichen. Daher kann ein insbesondere manuell betätigbarer Mechanismus zum Verschwenken der Aufstiege um ihre Drehachse direkt an der Drehachse oder zumindest in deren Nähe angeordnet werden. Man erspart sich somit aufwändige Mittel zur Kraftübertragung vom Mechanismus zu einer beabstandeten Drehachse. Außerdem bewegen sich nach oben über die maschinenfeste Plattform hinausragende Elemente der Aufstiege, insbesondere Holme oder Geländerteile, auf einem großen Kreisbogen um die Tür herum, was bei geöffneter Tür ein kollisionsfreies Verschwenken der Aufstiege um die Drehachse und ein Öffnen der Tür in allen Positionen der Aufstiege ermöglicht.

Bei einer möglichen Ausführungsform befindet sich die Türschwenkachse am vorderen Ende der Kabine. Dann liegt die Drehachse am rückwärtigen und in seitlicher Richtung äußeren Ende der maschinenfesten Plattform. Analog ist es möglich, die Türschwenkachse an das rückwärtige Ende der Kabine zu legen und die Drehachse an das vordere und in seitlicher Richtung äußere Ende der maschinenfesten Plattform zu verbringen. In beiden Fällen sind die Trittstufen der Aufstiege in der Außerbetriebsposition vorzugsweise in der Fahrtrichtung orientiert und befinden sich in der Betriebsposition vor oder hinter der maschinenfesten Plattform.

Zum Verschwenken der Aufstiege um ihre Drehachse gegenüber der maschinenfesten Plattform kommt beispielsweise eine von Hand um die Drehachse drehbare Kurbel in Frage. Es sind aber auch beliebige andere Antriebe der Aufstiege denkbar, z. B. fremdkraftbetätigte Antriebe mit elektrischen oder hydrostatischen Motoren, welche die Aufstiege über Untersetzungsgetriebe antreiben, oder Linearantriebe (Hydraulikzylinder), die mit der Aufstiege und der tragenden Struktur der Arbeitsmaschine gekoppelt sind. Auch andere mechanische, manuell betätigte Antriebe sind denkbar, wie um horizontale oder vertikale Achsen drehbare Handräder, die insbesondere über Untersetzungsgetriebe die Aufstiege bewegen, oder manuell betätigte Hebel (vgl. DE 1 580 314 A1).

Um den Kraftaufwand zu reduzieren, bietet es sich an, die Drehbewegung der Kurbel durch eine untersetzende Mechanik auf die Aufstiege zu übertragen. Hierfür wären Zahnradgetriebe verwendbar. Bevorzugt ist jedoch eine Antriebsanordnung, bei der die Kurbel eine drehbar an der Aufstiege gelagerte Welle umfasst, die starr mit einem Arm verbunden ist, der seinerseits durch eine an beiden Enden um eine parallel zur Drehachse der Aufstiege schwenkbar angelenkte Strebe mit der tragenden Struktur gekoppelt ist. Durch geeignete Positionierung der Drehachse der Welle an der Aufstiege und der Strebe kann eine geeignete Übersetzung erzielt werden.

Weiterhin kann die Kurbel gegenüber der Welle um eine horizontale Achse zwischen einer Betätigungs- und einer Ruheposition verschwenkt werden, um sie bei Nichtgebrauch in eine kompakte Ruheposition verbringen zu können, in der sie den Bediener bei eventuellen Arbeiten auf der Plattform oder beim Auf- oder Abstieg von der Plattform nicht stört.

Die Aufstiege umfasst zweckmäßigerweise zusätzlich eine begeh- und bewegbare, der maschinenfesten Plattform benachbarte Plattform, die drehbar an der tragenden Struktur gelagert ist und an deren von der Drehachse beabstandeten Kante die Trittstufen angeordnet sind. Auf diese Weise gelangt der Bediener bei in die Außerbetriebsstellung verbrachter Aufstiege über die Trittstufe auf die bewegbare Plattform der Aufstiege und von dort auf die maschinenfeste Plattform. Die Trittstufen können somit in der Außerbetriebsstellung weiter seitlich von der Arbeitsmaschine beabstandet positioniert werden als ohne bewegbare Plattform, was beispielsweise eine Anbringung von Doppelreifen an einer unterhalb der Kabine angeordneten Vorderachse erlaubt.

Bei einer bevorzugten Ausführungsform ist ein Geländerelement der Drehachse benachbart angeordnet und derart bewegungsmäßig mit der Aufstiege gekoppelt, dass es sich in der Betriebsstellung der Aufstiege in Vorwärtsrichtung erstreckt und die maschinenfeste Plattform zur Seite hin begrenzt und in der Außerbetriebsstellung der Aufstiege quer zur Vorwärtsrichtung erstreckt und die bewegbare Plattform nach hinten oder vom begrenzt. Auch hier sind beliebige Mechanismen zum Antrieb des Geländerelements verwendbar, wozu auf die obigen Ausführungen zur Kopplung der Kurbel mit der Aufstiege verwiesen wird. Insbesondere wird das Geländerelement frei drehbar auf der Welle der Kurbel gelagert und durch einen starr mit dem Geländerelement gekoppelten Arm und eine an beiden Enden um eine parallel zur Drehachse der Aufstiege schwenkbar angelenkte Strebe mit der tragenden Struktur gekoppelt.

Durch die beschriebene Aufstiege ist es ohne weiteres möglich, die Kabine und die Tür derart groß zu dimensionieren, dass die Tür in ihrer geöffneten Position seitlich über die maschinenfeste Plattform hinausragt. Da letztere maximal der bei einer Straßenfahrt zulässigen Breite entsprechend breit dimensioniert werden kann, kann die Tür somit über die bei einer Straßenfahrt zulässige Breite seitlich hinausragen.

### Ausführungsbeispiel

In den Zeichnungen ist ein nachfolgend näher beschriebenes Ausführungsbeispiel der Erfindung dargestellt. Es zeigt:
- Fig. 1: eine schematische seitliche Ansicht einer selbstfahrenden Erntemaschine in Form eines Mähdreschers mit einer in der Betriebsposition befindlichen Aufstiege,
- Fig. 2: eine perspektivische Ansicht der Aufstiege der Figur 1 und eines zum Haltern der Kabine dienenden Rahmenteils der Erntemaschine mit einer daran befestigten, begehbaren Plattform, wobei die Aufstiege sich in der Betriebsposition befindet,
- Fig. 3: die Ansicht nach Figur 2 mit in eine Zwischenposition verbrachten Aufstiege, und
- Fig. 4: die Ansicht nach Figur 2 mit in eine zum Auf- und Absteigen geeignete Außerbetriebsposition verbrachten Aufstiege.

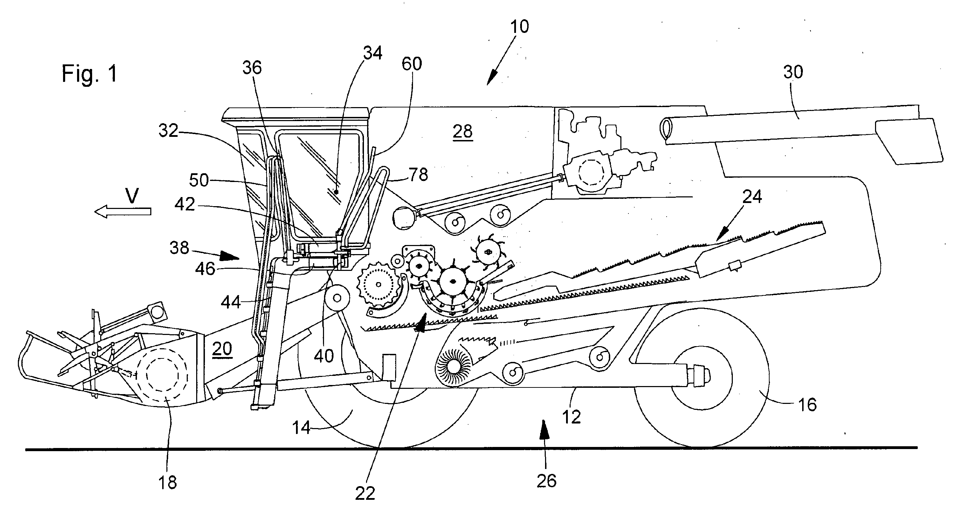

Die Figur 1 zeigt eine selbstfahrende Arbeitsmaschine 10 in Form eines landwirtschaftlichen Mähdreschers. Die Arbeitsmaschine 10 baut sich auf einer tragenden Struktur 12 mit vorderen, angetriebenen Rädern 14 und rückwärtigen, lenkbaren Rädern 16 auf, mit denen sie in einer Vorwärtsrichtung V über ein Feld bewegbar ist. An der Vorderseite der Arbeitsmaschine 10 ist an einem Schrägförderer 20 ein Erntevorsatz in Form eines Schneidwerks 18 lösbar befestigt, der im Erntebetrieb Erntegut abschneidet und dem Schrägförderer 20 zuführt. Das Erntegut wird dann im Inneren der Arbeitsmaschine 10 von einem Mehrtrommeldreschwerk 22 gedroschen und verbleibendes Korn wird durch einen Hordenschüttler 24 abgeschieden. Das Korn wird in einer Reinigungseinrichtung 26 gereinigt und in einem Korntank 28 abgelegt, aus dem es durch einen Entladeförderer 30 auf ein Transportfahrzeug überladen werden kann. Die Bedienung und Kontrolle der Arbeitsmaschine 10 erfolgt durch einen Bediener von einem in einer Kabine 32 bereitgestellten Bedienerarbeitsplatz aus. Die vorliegende Erfindung kann auch an beliebigen anderen Erntemaschinen, wie Feldhäckslern oder Baumwollpflückern oder Mähfahrzeugen oder anderen Arten von Arbeitsmaschinen, wie Baumaschinen, verwendet werden. Im Folgenden beziehen sich Richtungsangaben, wie vorn, hinten und seitlich, auf die Vorwärtsrichtung V der Arbeitsmaschine.

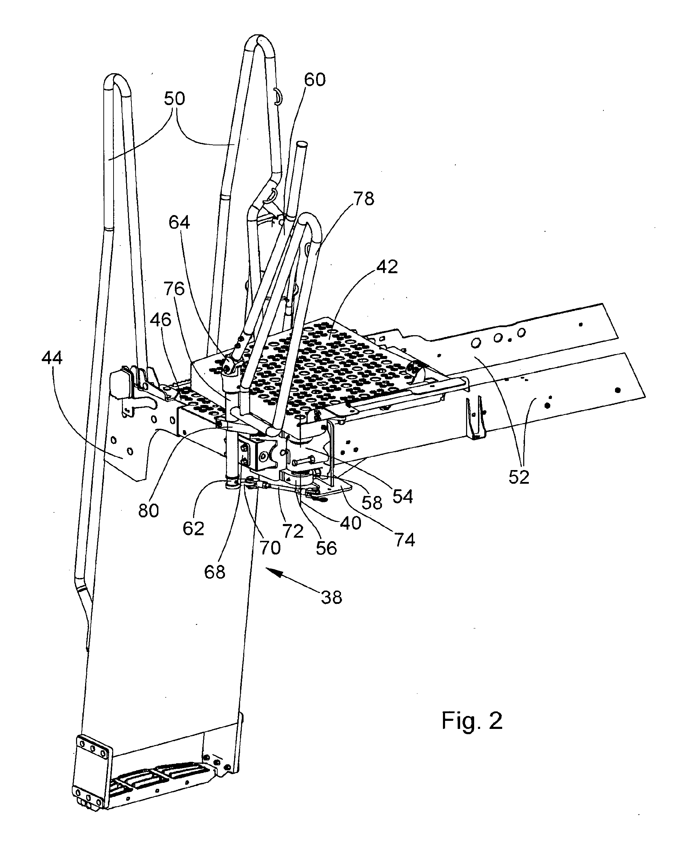

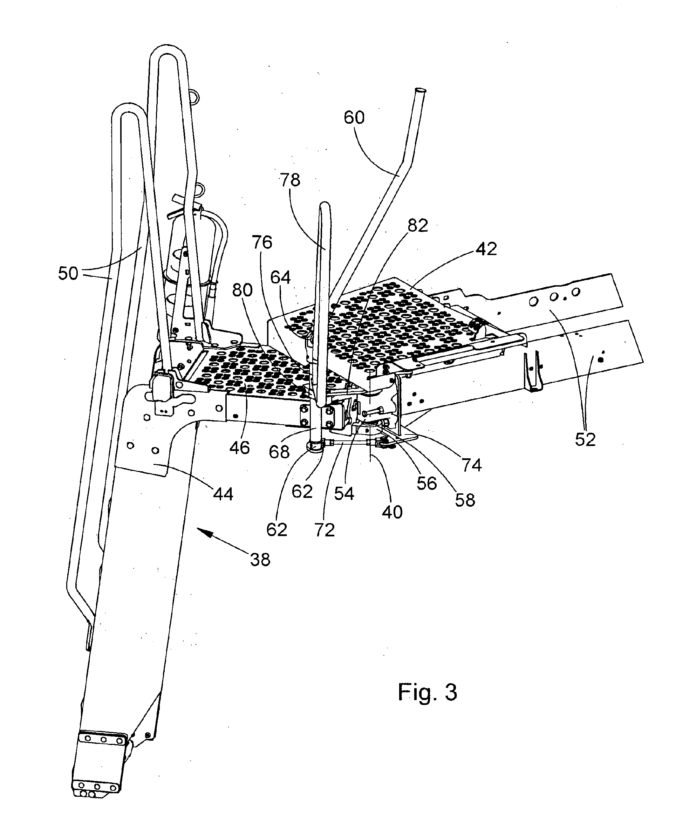

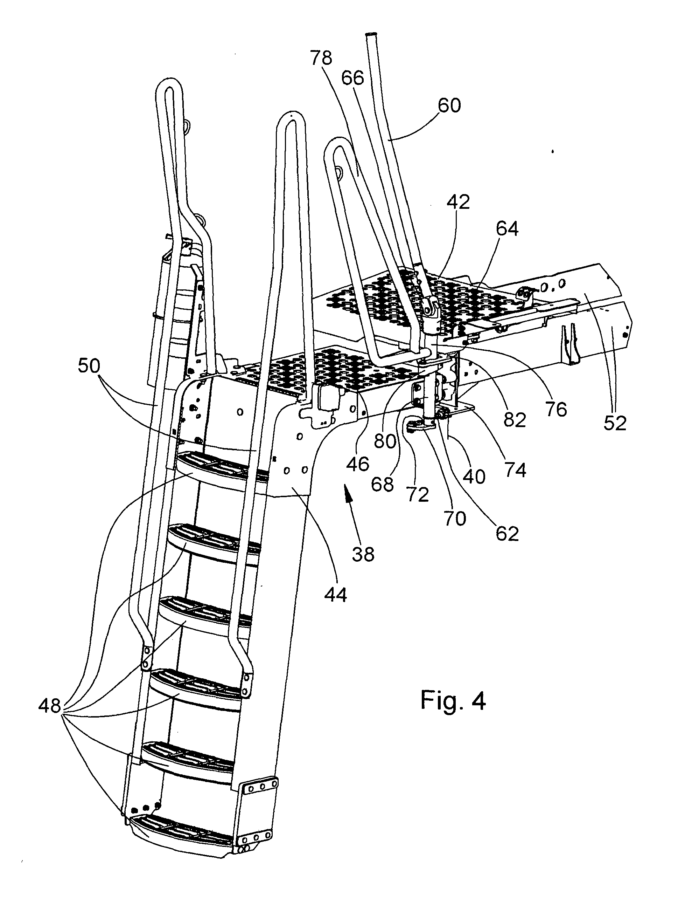

Die Kabine 32 umfasst eine seitliche, sich nach außen öffnende Tür 34, die sich aus einem äußeren Rahmen und einer darin eingelassenen Scheibe zusammensetzt. Die Tür 34 ist an ihrem vorderen Ende um eine näherungsweise vertikal verlaufende Türschwenkachse 36 beweglich, um dem Bediener einen Zugang zum Innenraum der Kabine 32 zu gewähren. Der Aufstieg zur Kabine 32 erfolgt über eine um eine vertikal verlaufende Drehachse 40 bewegliche Aufstiege 38, die in den Figuren 1 und 2 in einer Betriebsposition, in der Figur 4 in einer Außerbetriebsposition und in der Figur 3 in einer Zwischenposition dargestellt ist, und eine seitlich neben der Tür 34 angeordnete maschinenfeste Plattform 42. Da die Aufstiege 38 um die Drehachse 40 beweglich ist, kann sie in die Betriebsposition verbracht werden, in welcher sich die Aufstiege 38 vor der maschinenfesten Plattform 42 befindet und die Arbeitsmaschine 10 in Betrieb genommen und im Erntebetrieb über ein Feld oder zum Transport über eine Straße bewegt werden kann. In der Betriebsposition befinden sich die maschinenfeste Plattform 42 und die Aufstiege 38 innerhalb einer maximal zulässigen Breite für eine Straßenfahrt, die in Deutschland derzeit 3 m beträgt. In der Außerbetriebsposition wird die Aufstiege 38 hingegen zur Seite hin verschwenkt, sodass sie sich seitlich neben der maschinenfesten Plattform 42 befindet und ein Bediener vom Erdboden über die Aufstiege 38 und die Plattform 42 bei geöffneter Tür 34 in die Kabine 32 gelangen und in umgekehrter Reihenfolge wieder den Erdboden erreichen kann. Die Aufstiege 38 kann auch beim Erntebetrieb in der Außerbetriebsposition verbleiben, damit der Bediener bei eventuellen Störungen schneller an die betreffende Stelle gelangen kann. Die Aufstiege 38 kann in an sich bekannter Weise (s. DE 1 580 314 A1) in der Betriebs- und Außerbetriebsposition arretiert werden.

Die Aufstiege 38 umfasst ein Rahmengestell 44, an dessen oberem Ende eine mit der Aufstiege 38 bewegbare Plattform 46 angeordnet ist, unter der sich in der dargestellten Ausführungsform insgesamt sechs Trittstufen 48 befinden. Außerdem trägt das Rahmengestell 44 noch beidseits neben den Trittstufen 48 angeordnete Holme 50, die jeweils am oberen Bereich des Rahmengestells 44 in der Nähe der Plattform 46 und neben der dritten Trittstufe 48 von unten am Rahmengestell 44 angebracht sind. Die Holme 50 bilden einen Handlauf, der auch nach oben über die Plattform 46 hinausragt und dem Bediener einen sicheren Auf- und Abstieg ermöglicht.

Die maschinenfeste Plattform 42 ist an Rahmenelementen 52 der tragenden Struktur 12 befestigt, die sich parallel zueinander und hintereinander positioniert in Querrichtung der Arbeitsmaschine 10 erstrecken und auch die Kabine 32 an der Struktur 12 haltern. Am rückwärtigen Rahmenelement 52 ist das Rahmengestell 42 durch eine die Drehachse 40 definierende Drehlagerung abgestützt, die einen oberen, am rückwärtigen Rahmenelement 52 befestigten Lagerblock 54 und einen unteren, am Rahmengestell 44 der Aufstiege 38 befestigten Lagerblock 56 umfasst, die durch eine Achse 58 untereinander um die Drehachse 40 schwenkbar verbunden sind. Die Drehachse 40 und die Türschwenkachse 36 befinden sich somit an diagonal gegenüberliegenden Ecken der maschinenfesten Plattform 42, wie sich auch aus einer Gesamtschau der Figuren 1 und 2 ergibt. Die Verschwenkbewegung der Aufstiege 38 erfolgt durch eine Kurbel 60, die über eine Schwenklagerung 64 mit einer horizontalen Achse 66 an einer unteren, sich vertikal erstreckenden Welle 62 befestigt ist. Die Schwenklagerung 64 ermöglicht es, die Kurbel 60 in der Stellung gemäß Figur 4 nach hinten in eine Ruhestellung (nicht gezeigt, s. aber Figur 1 und 2) zu schwenken, damit sie den Durchgang zur Plattform 46 freigibt.

Die Welle 62 ist ihrerseits der Plattform 46 benachbart durch eine rohrförmige, am Rahmengestell 44 festgelegte Lagerung 68 am Rahmengestell 44 um eine parallel zur Drehachse 40 verlaufende Achse drehbar gelagert. Eine weitere Verbindung zwischen der Welle 62 und der Struktur 12 wird über einen starr am unteren Ende der Welle 62 befestigten Arm 70, eine Strebe 72 und eine am rückwärtigen Rahmenelement 52 befestigte Platte 74 bereitgestellt. Der Arm 70 erstreckt sich radial von der Welle 62 nach außen. Die Strebe 72 ist an ihrem ersten Ende um eine vertikale Achse schwenkbar am Arm 70 und an ihrem zweiten Ende um eine vertikale Achse an der Platte 74 angelenkt. Diese Anordnung bewirkt bei einer Drehung der Kurbel 60 um ca. 180° eine Drehung der Aufstiege 38 um etwa 90° und ermöglicht eine kraftsparende Verstellung der Aufstiege 38 durch den Bediener.

Oberhalb der Lagerung 68 ist an der Welle 62 eine weitere, gegenüber der Welle 62 frei drehbare Drehlagerung 76 angeordnet, die ein Geländerelement 78 haltert. Das Geländerelement 78 ist über eine äußere Hülse der Drehlagerung 76 mit einem unteren Arm 80 verbunden, der über eine Strebe 82 mit einem Befestigungspunkt am rückwärtigen Rahmenelement 52 gekoppelt ist. Der Arm 80 erstreckt sich radial von der äußeren Hülse der Drehlagerung 76 nach außen. Die Strebe 82 ist an ihrem ersten Ende um eine vertikale Achse schwenkbar am Arm 80 und an ihrem zweiten Ende um eine vertikale Achse schwenkbar am Rahmenelement 52 angelenkt. Diese Anordnung bewirkt, dass das Geländerelement 78 sich am äußeren seitlichen Rand der maschinenfesten Plattform 42 in Fahrtrichtung erstreckt, wenn sich die Aufstiege 38 in der Betriebsposition befindet. Das Geländerelement 78 dreht sich bei Betätigung der Kurbel 60 um die Drehachse 40 gegensinnig zur Aufstiege 38 und erstreckt sich am rückwärtigen Rand der Plattform 46 der Aufstiege 38, wenn sich diese in der Außerbetriebsposition befindet.

Die Positionierung der Drehachse 40 und der Türschwenkachse ermöglicht es, dass die oberen Bereiche der Holme 50 einen Bogen um die geöffnete Tür 34 herum beschreiben, wenn letztere geöffnet ist. Die Tür 34 kann demnach sowohl geöffnet werden, wenn sich die Aufstiege 38 in der Betriebsposition befindet, als auch wenn sie in der Außerbetriebsposition ist. In beiden Positionen kann die Kurbel 60 problemlos betätigt werden. Die Tür 34 kann in der geöffneten Position ein vorderes, an der Vorderseite der maschinenfesten Plattform 42 angebrachtes Geländer (nicht gezeigt) ersetzen oder ergänzen. Die vorliegende Anordnung ermöglicht es, die Kabine 32 und die Tür 34 derart groß zu bemessen, dass die Tür in geöffneter Stellung seitlich über die Plattform 42 und demnach über die zulässige Breite für eine Straßenfahrt hinausragt.

## Patentansprüche

1. Arbeitsmaschine (10) mit einer in einer Vorwärtsrichtung (V) bewegbaren, tragenden Struktur (12), einer an der tragenden Struktur (12) befestigten Kabine (32), die einen Bedienerarbeitsplatz und eine um eine zumindest etwa vertikale Türschwenkachse (36) nach außen schwenkbare Tür (34) umfasst, einer begehbaren, der Tür (34) seitlich benachbarten, maschinenfesten Plattform (42), und einer gegenüber der maschinenfesten Plattform (42) zwischen einer Betriebsposition und einer begehbaren Außerbetriebsposition bewegbaren Aufstiege (38) mit übereinander angeordneten Trittstufen (48), wobei die Aufstiege (38) um eine zumindest näherungsweise vertikale Drehachse (40) drehbar an der tragenden Struktur (12) abgestützt ist, **dadurch gekennzeichnet dass** die Drehachse (40) und die Türschwenkachse (36) an oder in der Nähe von diagonal gegenüberliegenden Ecken der maschinenfesten Plattform (42) positioniert sind.

2. Arbeitsmaschine (10) nach Anspruch 1, **dadurch gekennzeichnet, dass** sich die Türschwenkachse (36) am vorderen Ende der Kabine (32) befindet und dass sich die Drehachse (40) am rückwärtigen, seitlich äußeren Ende der maschinenfesten Plattform (42) befindet, wobei die Trittstufen (48) der Aufstiege (38) in der Außerbetriebsposition in Fahrtrichtung orientiert sind und sich in der Betriebsposition vor oder hinter der maschinenfesten Plattform (42) befinden.

3. Arbeitsmaschine (10) nach Anspruch 1 oder 2, **dadurch gekennzeichnet, dass** die Aufstiege (38) durch eine um die Drehachse (40) drehbare Kurbel (60) gegenüber der maschinenfesten Plattform (42) zwischen der Betriebsposition und der Außerbetriebsposition bewegbar ist.

4. Arbeitsmaschine (10) nach Anspruch 3, **dadurch gekennzeichnet, dass** die Drehbewegung der Kurbel (60) durch eine untersetzende Mechanik auf die Aufstiege (38) übertragen wird.

5. Arbeitsmaschine (10) nach Anspruch 3 oder 4, **dadurch gekennzeichnet, dass** die Kurbel (38) eine drehbar an der Aufstiege (38) gelagerte Welle (62) umfasst, die starr mit einem Arm (70) verbunden ist, der seinerseits durch eine an beiden Enden um eine parallel zur Drehachse (40) schwenkbar angelenkte Strebe (72) mit der tragenden Struktur (12) gekoppelt ist.

6. Arbeitsmaschine (10) nach einem der Ansprüche 3 bis 5, **dadurch gekennzeichnet, dass** die Kurbel (60) gegenüber der Welle (62) um eine horizontale Achse (66) zwischen einer Betätigungs- und einer Ruheposition verschwenkbar ist.

7. Arbeitsmaschine (10) nach einem der Ansprüche 1 bis 6, **dadurch gekennzeichnet, dass** die Aufstiege (38) eine begeh- und bewegbare, der maschinenfesten Plattform (42) benachbarte Plattform (46) umfasst, an deren von der Drehachse (40) beabstandeten Kante die Trittstufen (48) angeordnet sind.

8. Arbeitsmaschine (10) nach Anspruch 7, **dadurch gekennzeichnet, dass** ein Geländerelement (78) der Drehachse (40) benachbart angeordnet und derart bewegungsmäßig mit der Aufstiege (38) gekoppelt ist, dass es sich in der Betriebsstellung der Aufstiege (38) in Vorwärtsrichtung erstreckt und die maschinenfeste Plattform (42) zur Seite hin begrenzt und in der Außerbetriebsstellung der Aufstiege (38) quer zur Vorwärtsrichtung erstreckt und die bewegbare Plattform (46) nach hinten oder vorn begrenzt.

9. Arbeitsmaschine (10) nach Anspruch 8, **dadurch gekennzeichnet, dass** das Geländerelement (78) frei drehbar auf der Welle (62) der Kurbel (60) gelagert und durch einen starr mit dem Geländerelement (78) gekoppelten Arm (80) und eine an beiden Enden um eine parallel zur Drehachse (60) schwenkbar angelenkte Strebe (82) mit der tragenden Struktur (12) gekoppelt ist.

10. Arbeitsmaschine (10) nach einem der Ansprüche 1 bis 9, **dadurch gekennzeichnet, dass** die Tür (34) in geöffneter Position seitlich über die maschinenfeste Plattform (42) hinausragt.

## Claims

1. Work machine (10) with a supporting structure (12) which is movable in a forwards direction (V), a cab (32) which is fastened to the supporting structure (12) and comprises an operator's work place and a door (34) which is pivotable outwards about at least one approximately vertical door pivot axis (36), a platform (42) which can be walked on, is laterally adjacent to the door (34) and is fixed on the machine, and a ladder (38) which is movable between an operative position and an inoperative position, which can be walked on, in relation to the platform (42) fixed on the machine, and has steps (48) arranged one above another, wherein the ladder (38) is supported on the supporting structure (12) so as to be rotatable about an at least approximately vertical axis of rotation (40), **characterized in that** the axis of rotation (40) and the door pivot axis (36) are positioned on or in the vicinity of diagonally opposite corners of the platform (42) fixed on the machine.

2. Work machine (10) according to Claim 1, **characterized in that** the door pivot axis (36) is located at the front end of the cab (32), and **in that** the axis of rotation (40) is located at the rear, laterally outer end of the platform (42) fixed on the machine, wherein the steps (48) of the ladder (38) are oriented in the direction of travel in the inoperative position and, in the operative position, allocated in front of or behind the platform (42) fixed on the machine.

3. Work machine (10) according to Claim 1 or 2, **characterized in that** the ladder (38) is movable by a crank (60) which is rotatable about the axis of rotation (40), between the operative position and the inoperative position in relation to the platform (42) fixed on the machine.

4. Work machine (10) according to Claim 3, **characterized in that** the rotational movement of the crank (60) is transmitted to the ladder (38) by a stepping-down mechanism.

5. Work machine (10) according to Claim 3 or 4, **characterized in that** the crank (38) comprises a shaft (62) which is mounted rotatably on the ladder (38) and is rigidly connected to an arm (70) which, for its part, is coupled to the supporting structure (12) via a strut (72) which is articulated pivotably at both ends about a vertical axis parallel to the axis of rotation (40).

6. Work machine (10) according to one of Claims 3 to 5, **characterized in that** the crank (60) is pivotable about a horizontal axis (66) in relation to the shaft (62) between an actuating position and a rest position.

7. Work machine (10) according to one of Claims 1 to 6, **characterized in that** the ladder (38) comprises a platform (46) which can be walked on and is movable, is adjacent to the platform (42) fixed on the machine and has the steps (48) arranged at the edge thereof spaced apart from the axis of rotation (40).

8. Work machine (10) according to Claim 7, **characterized in that** a railing element (78) is arranged adjacent to the axis of rotation (40) and is coupled in terms of movement to the ladder (38) in such a manner that, in the operating position of the ladder (38), said railing element extends in the forwards direction and bounds the platform (42), fixed on the machine, towards the side and, in the inoperative position of the ladder (38), extends transversely with respect to the forwards direction and bounds the movable platform (46) to the rear or front.

9. Work machine (10) according to Claim 8, **characterized in that** the railing element (78) is mounted in a freely rotatable manner on the shaft (62) of the crank (60) and is coupled to the supporting structure (12) by an arm (80), which is coupled rigidly to the railing element (78), and by a strut (82) which is articulated pivotably at both ends about a vertical axis parallel to the axis of rotation (60).

10. Work machine (10) according to one of Claims 1 to 9, **characterized in that**, in the open position, the door (34) protrudes laterally over the platform (42) fixed on the machine.

## Revendications

1. Machine de travail (10) comprenant une structure porteuse (12) déplaçable dans une direction vers l'avant (V), une cabine (32) fixée à la structure porteuse (12), laquelle cabine comporte un poste de travail d'opérateur et une porte (34) pouvant être pivotée vers l'extérieur autour d'un axe de pivotement de porte (36) au moins approximativement vertical, une plate-forme solidaire de la machine (42) adjacente latéralement à la porte (34) et accessible, et une montée (38) comprenant des marches superposées (48) déplaçable par rapport à la plate-forme solidaire de la machine (42) entre une position de fonctionnement et une position de non fonctionnement accessible, la montée (38) étant supportée sur la structure porteuse (12) de manière à pouvoir tourner autour d'un axe de rotation (40) au moins approximativement vertical, **caractérisée en ce que** l'axe de rotation (40) et l'axe de pivotement de porte (36) sont positionnés au niveau de coins diamétralement opposés de la plate-forme solidaire de la machine (42) ou à proximité de ceux-ci.

2. Machine de travail (10) selon la revendication 1, **caractérisée en ce que** l'axe de pivotement de porte (36) se trouve à l'extrémité avant de la cabine (32), et **en ce que** l'axe de rotation (40) se trouve à l'extrémité arrière latéralement extérieure de la plate-forme solidaire de la machine (42), les marches (48) de la montée (38) étant orientées dans la direction de conduite dans la position de non fonctionnement et se trouvant devant ou derrière la plate-forme solidaire de la machine (42) dans la position de fonctionnement.

3. Machine de travail (10) selon la revendication 1 ou 2, **caractérisée en ce que** la montée (38) est déplaçable par rapport à la plate-forme solidaire de la machine (42) entre la position de fonctionnement et la position de non fonctionnement au moyen d'une manivelle (60) pouvant tourner autour de l'axe de rotation (40).

4. Machine de travail (10) selon la revendication 3, **caractérisée en ce que** le mouvement de rotation de la manivelle (60) est transmis à la montée (38) au moyen d'un mécanisme de démultiplication.

5. Machine de travail (10) selon la revendication 3 ou 4, **caractérisée en ce que** la manivelle (38) comporte un arbre (62) monté rotatif sur la montée (38), lequel arbre est relié rigidement à un bras (70) qui est pour sa part accouplé à la structure porteuse (12) au moyen d'un montant (72) articulé de manière à pouvoir pivoter autour d'un axe vertical parallèlement à l'axe de rotation (40) aux deux extrémités.

6. Machine de travail (10) selon l'une quelconque des revendications 3 à 5, **caractérisée en ce que** la manivelle (60) peut être pivotée par rapport à l'arbre (62) autour d'un axe horizontal (66) entre une position d'actionnement et une position de repos.

7. Machine de travail (10) selon l'une quelconque des revendications 1 à 6, **caractérisée en ce que** la montée (38) comporte une plate-forme (46) déplaçable et accessible et adjacente à la plate-forme solidaire de la machine (42), sur les bords espacés de l'axe de rotation (40) de laquelle sont disposées les marches (48).

8. Machine de travail (10) selon la revendication 7, **caractérisée en ce qu'**un élément de balustrade (78) est disposé de manière adjacente à l'axe de rotation (40) et est accouplé à la montée (38) en ce qui concerne les déplacements, de telle sorte qu'il s'étende dans la direction vers l'avant dans la position de fonctionnement de la montée (38) et délimite la plate-forme solidaire de la machine (42) en direction du côté, et qu'il s'étende transversalement à la direction vers l'avant dans la position de non fonctionnement de la montée (38) et délimite vers l'avant ou vers l'arrière la plate-forme déplaçable (46).

9. Machine de travail (10) selon la revendication 8, **caractérisée en ce que** l'élément de balustrade (78) est monté de manière à pouvoir tourner librement sur l'arbre (62) de la manivelle (60) et est accouplé à la structure porteuse (12) au moyen d'un bras (80) accouplé rigidement à l'élément de balustrade (78) et d'un montant (82) articulé de manière à pouvoir pivoter autour d'un axe vertical parallèlement à l'axe de rotation (60) aux deux extrémités.

10. Machine de travail (10) selon l'une quelconque des revendications 1 à 9, **caractérisée en ce que**, dans la position ouverte, la porte (34) dépasse latéralement au-delà de la plate-forme solidaire de la machine (42).
